# EUROPÄISCHE PATENTSCHRIFT

(11) **EP 2 009 995 B1**
(45) Veröffentlichungstag und Bekanntmachung des Hinweises auf die Patenterteilung: **02.12.2009**
(21) Anmeldenummer: 07728478.4
(22) Anmeldetag: 25.04.2007
(51) Int. Cl.: A22B 5/20, A22B 5/00

(54) **VERFAHREN ZUR DURCHFÜHRUNG VON ZUMINDEST EINEM BEARBEITUNGSSCHRITT AN EINEM SCHLACHTTIER SOWIE BEARBEITUNGSSTATION**
PROCEDURE FOR THE PROCESSING OF AT LEAST ONE PROCESSING STEP ON A SLAUGHTERED ANIMAL AS WELL AS A PROCESSING STATION
PROCÉDÉ D'APPLICATION D'AU MOINS UNE ÉTAPE D'USINAGE À UN ANIMAL D'ABATTAGE ET POSTE D'USINAGE

(30) Priorität: 25.04.2006 DE 102006019632
(43) Veröffentlichungstag der Anmeldung: 07.01.2009
(73) Patentinhaber: Banss Schlacht- und Fördertechnik GmbH, 35216 Biedenkopf (DE)
(72) Erfinder: WEIDE, Harald, 35216 Biedenkopf (DE); STARK, Marek, 35083 Wetter (DE); SCHMIDT, Frank, 35232 Dautphetal (DE)
(74) Vertreter: Stoffregen, Hans-Herbert
(86) Internationale Anmeldenummer: PCT/EP2007/054022
(87) Internationale Veröffentlichungsnummer: WO 2007/122244

(56) Entgegenhaltungen:
- WO-A-01/67873
- WO-A-93/01725
- DE-B3-102004 022 346
- US-A- 4 667 371
- US-A1- 2001 016 471
- US-B1- 6 623 348

## Beschreibung

Die Erfindung bezieht sich auf ein Verfahren zum Durchführen von zumindest einem Bearbeitungsschritt in zumindest einer Bearbeitungsstation an einem in einer Schlachtstraße entlang einer Förderbahn hängend geförderten Schlachttier durch Scannen des Schlachttieres, Digitalisieren der Scanndaten und Zuführung dieser an eine Steuerung einer Handhabungseinrichtung wie Roboter, über die der zumindest eine Bearbeitungsschritt durchgeführt wird. Ferner nimmt die Erfindung Bezug auf eine Bearbeitungsstation einer Schlachtstraße, durch die ein Abschnitt eines Förderers verläuft, der ein Schlachttier hängend fördert, umfassend ein zumindest einen Bearbeitungsschritt durchführendes von einer Handhabungseinrichtung wie Roboter betätigtes Schneidwerkzeug mit einem um eine Drehachse rotierenden Schneidmesser wie eine Schneidsäge, das von einer um die Drehachse verschwenkbaren und das Schneidmesser bereichsweise abdeckenden Schutzhaube umgeben ist, wobei in Abhängigkeit von der durchzuführenden Bearbeitung wirksamer Schneidsektor des von der Schutzhaube unabgedeckten Schneidmessers unterschiedlich groß ist.

Aus der DE-Z.: Fleischwirtschaft 8/2005, Seiten 25 bis 28, Schmidt, F.: "Roboter toppen Spezialmaschinen" und US-A-6 623 348 sind gattungsgemäße Verfahren bekannt. Dabei werden Schlachtschweine am Anfang einer Roboterlinie durch eine Messstation geführt, in der durch einen oder mehrere Laserscanner ein Obertlächenprofil des Schlachttierkörpers digitalisiert wird. Mittels eines Roboters (Handhabungseinrichtung) können sodann auf der Basis der digitalisierten Werte Vorderpfoten abgekniffen, Rektum freigeschnitten, Schlossknochen getrennt und Bauchdecke und Brustbein geöffnet werden. Die einzelnen Bearbeitungen erfolgen dabei in getrennten Bearbeitungsstationen. Während der einzelnen Bearbeitungsschritte wird das Schlachttier gefördert, so dass im kontinuierlichen Betrieb, d. h. das vom Roboter geführte Werkzeug fährt synchron zur Transportbewegung des Schlachttierförderers mit, die Arbeiten an dem Schlachttier durchgeführt werden.

Aus der EP-B-0 594 791 sind ein Verfahren sowie eine Vorrichtung zum Aufschneiden eines Tierkörpers bekannt. Beim Öffnen der Bauchdecke und des brustbeines werden die Eingeweide von der Bauchwand ferngehalten. Hierzu weist ein Schneidwerkzeug einen relativ zu diesem positionierbaren Dorn auf.

Um beim Schlachten von an den Hinterbeinen aufgehängten Schweinen die Vorderbeine ordnungsgemäß zu positionieren, ist nach der EP-B-1 182 933 ein Positionierungsmittel mit einem im Wesentlichen festen Positionierungskörper vorgesehen, der zwischen die Vorderbeine des Schlachttieres getrieben wird.

Ein Schneidwerkzeug mit rotierendem Messer ist der DE-B-10 2004 022 346 zu entnehmen. Dabei wird das Schneidmesser von einer Schutzhaube umgeben, die zu dem Schneidmesser drehbar ist. In einer zurückgezogenen Stellung wird das Schneidmesser in das Schlachttier eingeschnitten; um sodann nach erfolgtem Einschnitt die Abdeckung in Richtung des Schlachttieres zu verstellen.

Der vorliegenden Erfindung liegt die Aufgabe zu Grunde, ein Erfahren und eine Bearbeitungsstation der eingangs genannten Art so weiterzubilden, dass eine hochpräzise Bearbeitung bei hohem Durchsatz ermöglicht wird.

Zur Lösung der Aufgabe wird verfahrensgemäß im Wesentlichen vorgeschlagen, dass in der einen Bearbeitungsstation während des Förderns des Schlachttieres als Bearbeitungsschritte sowohl Beckenknochen des Schlachttieres geöffnet als auch Bauchdecke und Brustbein mittig geöffnet werden unter Verwendung eines Schneidwerkzeugs mit um eine Drehachse rotierendem Schneidmesser, das von einer drehbar um die Drehachse angeordneten Schutzhaube bereichsweise abgedeckt ist, und dass das Schlachttier während der Bearbeitung mit seiner Rückseite an einer mit dem Förderer synchron mitbewegten Abstützung abgestützt wird und gegen die Abstützung von einem mit dem Schneidwerkzeug mitbewegten Druckelement gedrückt wird, wobei beim Durchtrennten des Beckenknochens das Druckelement vom Schlachttier beabstandet wird und die Schutzabdeckung einen größeren Schneidsektor des Schneidmessers freigibt als beim Öffnen der Bauchdecke und des Brustbeins.

Erfindungsgemäß werden mit einem Modul zwei komplette Arbeitsschritte verrichtet, die nach dem Stand der Technik zwei Module erfordert. Gleichzeitig erfolgt eine präzise Ausrichtung des Schlachttieres zu der Abstützung, so dass ein fehlerfreies Bearbeiten des Schlachttieres erfolgen kann. Da die Abstützung synchron mit dem Förderer mitbewegt wird, ist eine Relativverstellung nicht möglich.

In Weiterbildung der Erfindung ist vorgesehen, dass das Schneidwerkzeug mit der Abdeckung als Einheit um eine zweite Achse verschwenkt wird. Hierdurch ergibt sich problemlos die Möglichkeit, dass die Schneidvorrichtung derart auf das Schlachttier ausgerichtet wird, dass im erforderlichen Umfang ein Eindringen in den Schlachttierkörper zum Öffnen des Schlossknochens (Beckenknochens) möglich ist. Eine diesbezügliche Möglichkeit bietet z. B. die EP-B-1 182 933 nicht, da das Schneidwerkzeug entlang einer Säule ausschließlich vertikal verstellbar ist. Nach der EP-B-0 594 791 ergibt sich der Nachteil, dass das Schlachttier durch das Einwirken des Schneidwerkzeuges in Bezug auf den Förderer in schwingende Bewegung geraten kann, so dass eine hochpräzise Bearbeitung nicht möglich ist.

In Weiterbildung der Erfindung ist vorgesehen, dass die Schutzhaube und/oder das Druckelement mit Druckzylindern wie Luftdruckzylindern verstellt werden können. Unabhängig hiervon ist das Druckelement um eine außerhalb des Schneidwerkzeugs verlaufende dritte Achse verschwenkbar.

Eine Bearbeitungsstation der eingangs genannten Art zeichnet sich dadurch aus, dass in der Bearbeitungsstation ein das Schlachttier abstützende synchron mit dem Förderer mitbewegbare Abstützung vorgesehen ist, dass von der Handhabungseinrichtung ein das Schlachttier gegen die Abstützung drückendes Druckelement ausgeht, das in einer ersten Stellung, in der als erster Bearbeitungsschritt Beckenknochen des Schlachttieres mit dem Schneidmesser geöffnet wird, zu dem Schlachttier beabstandet ist und in einer zweiten Stellung, in der als zweiter Bearbeitungsschritt Bauchdecke und Brustkorb mittig durchtrennt werden, das Schlachttier genen die Abstützung drückt. Durch diese Maßnahmen ist sichergestellt, dass das Schneidmesser behinderungsfrei den Beckenknochen öffnen kann, um sodann bei der weiteren Bearbeitung, also bei dem Öffnen von Bauchdecke und. Brustbein in derselben Bearbeitungsstation, das Schlachttier positionsgenau an der Abstützung abgestützt und synchron mit dem Förderer gefördert wird.

Die Abstützung selbst sollte zumindest ein sich entlang des Förderers erstreckendes umlaufendes Band sein, so dass eine Abstützung des Schlachttieres mit konstruktiv einfachen Maßnahmen realisiert ist. Selbstverständlich besteht auch die Möglichkeit, mehrere entsprechende Abstützbänder entlang der Rückenseite des Schlachttieres anzuordnen, um eine Relativbewegung zu unterbinden.

In Weiterbildung der Erfindung ist das Schneidwerkzeug zusammen mit dem Druckelement als Einheit uni eine beabstandet zu der Drehachse verlaufende zweite Achse schwenkbar, wodurch die erforderliche Bewegungsfreiheit zum Durchtrennten des Beckenknochens gegeben ist.

Insbesondere ist vorgesehen, dass das Druckelement ein Bügel mit jeweils einem zu einer Seite des Schneidmessers verlaufenden Schenkel ist, die über einen Querschenkel verbunden sind, der unterhalb des Schneidmessers verläuft. Das Druckelement kann sodann außerhalb des Schneidwerkzeugs und parallel zu der Drehachse um eine dritte Achse verschwenkt werden.

In Ausgestaltung der Erfindung ist vorgesehen, dass beim Öffnen des Beckenknochens die Schutzhaube in einem zurückgezogenen wirksamen Schneidsektor des Schneidmessers im Vergleich zur Bauchdecke und Brustbein durchtrennenden Bearbeitung vergrößernden Stellung positioniert ist. Insbesondere wird die Schutzhaube in der den Schlossknochen öffnenden Stellung gegenüber der Stellung, in der Bauchdecke und Brustbein geöffnet werden, um 90° verschwenkt.

Losgelöst hiervon sollte die Schutzhaube bei die Bauchdecke und das Brustbein durchtrennender Stellung aktiv unverstellbar sein, also im Vergleich zum Stand der Technik keine gezielte Bewegung durchführen.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden Ausführungsbeispielen.

Es zeigen:
- Fig. 1: eine Prinzipdarstellung einer Bearbeitungsstation,
- Fig. 2: die Bearbeitungsstation nach Fig. 1 in Draufsicht,
- Fig. 3: ein Schneidwerkzeug mit Druckelement in einer den Schlossknochen öffnenden Stellung und
- Fig. 4: die Schneidwerkzeug-Druckelement-Einheit gemäß Fig. 3 in einer Bauchdecke und Brustbein öffnenden Stellung.

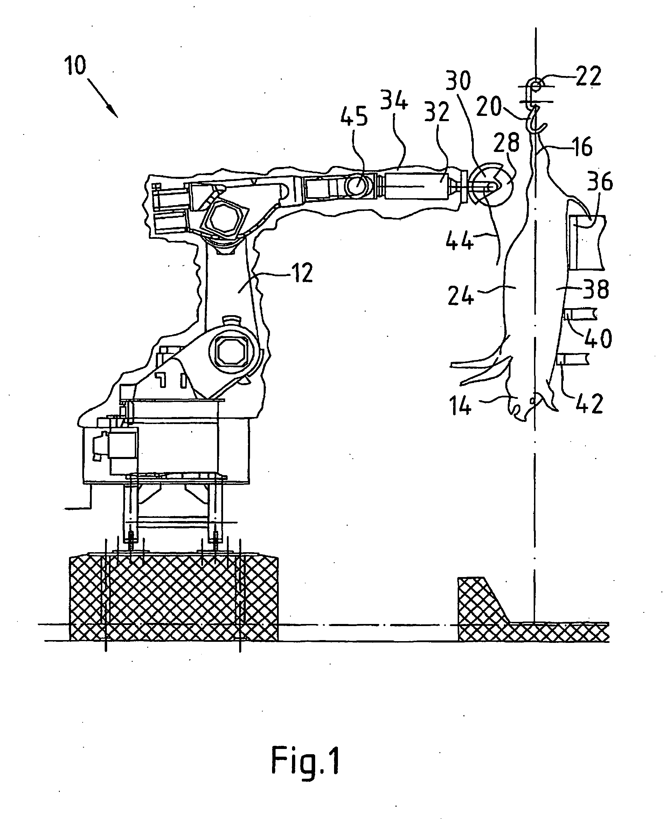

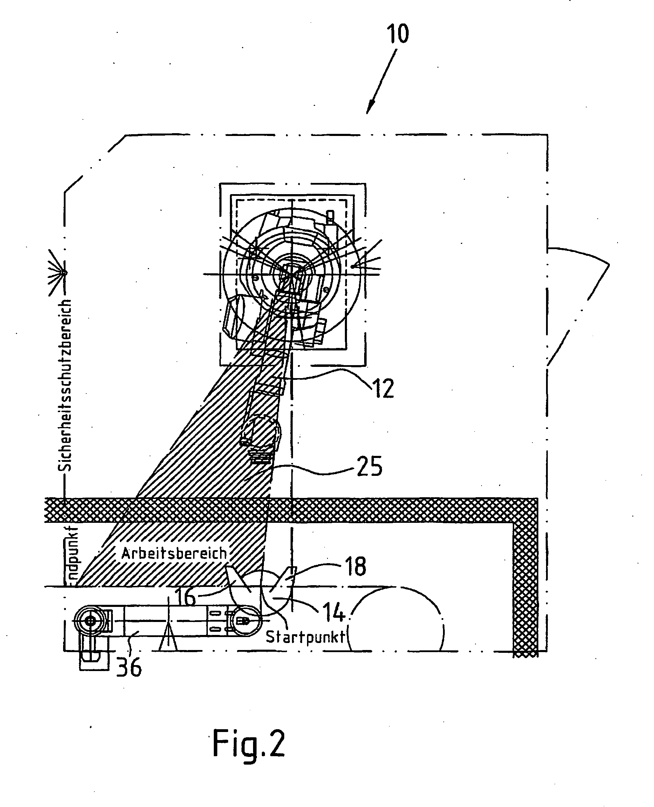

Den Fig. 1 und 2 ist eine Bearbeitungsstation 10 zu entnehmen, in der mittels eines Roboters 12 ein Schlachttier 14 bearbeitet wird. Hierbei handelt es sich beispielhaft um ein an seinen Hinterbeinen 16, 18 hängend transportiertes Schwein. Die Hinterbeine 16, 18 sind mit Haken 20 verbunden, die auf einer Rohrbahn 22 eines insbesondere Stetigförderers verschiebbar angeordnet sind. Andere Förderer kommen selbstverständlich auch in Frage. Insoweit wird auf bekannte Techniken in Schlachtstraßen verwiesen.
Das Schwein 14 ist mit seiner Bauchseite 24 dem Roboter 12 zugewandt, der über digitalisierte Scanndaten gesteuert wird, die durch nicht dargestellte, aber aus dem Stand der Technik bekannte Scanndaten des Schweins 14 gewonnen werden. Hierzu wird das Schwein an einen oder mehreren Laserscannern vorbeigeführt, mit der zumindest die Bereiche des Schweins 14 gescannt werden, die bearbeitet werden sollen.

Erfindungsgemäß werden in der Bearbeitungsstation 10, und zwar in dem in Fig. 2 schraffierten Arbeitsbereich 25, sowohl Schlossknochen als auch Bauchdecke und Brustbein des Schweins 14 geöffnet. Dies erfolgt mittels eines Schneidwerkzeugs mit einem um eine Drehachse 26 rotierenden Schneidmesser 28 wie einer Säge. Das Schneidmesser 28 ist von einer Schutzhaube 30 umgeben, die um die Drehachse 26 verschwenkbar ist. Das Schneidmesser 28 mit der Schutzhaube 30 gehen von einem Arm 32 des Roboters aus, um im gewünschten Umfang die Bearbeitung des Schweins 14 vornehmen zu können. Der Roboter 12 selbst ist von einer Schutzhülle 34 umgeben, um hygienischen Anforderungen zu genügen.

Die Bearbeitung des Schweins 14 mittels des Roboters 12 erfolgt während des Transports des Schweins 14, also während des Förderns durch den Arbeitsbereich 25. Um eine Positionsveränderung des Schweins 14 während der Bearbeitung und des Transports durch den Arbeitsbereich. 25 auszuschließen, wodurch anderenfalls eine unpräzise Bearbeitung des Schweins 14 erfolgen würde, wird dieses auf einer Abstützung 36 mit seiner Rückseite 38 abgestützt. Dabei bewegt sich die Abstützung 36. synchron mit dem Förderer. Im Ausführungsbeispiel handelt es sich bei der Abstützung 36 um ein umlaufendes flächiges Band. Entsprechend der Darstellung in Fig. 1 können mehrere entsprechende Bänder bzw. Abstützungen 36, 40, 42 vorgesehen sein, um das Schwein 14 in zueinander beabstandeten Bereichen abzustützen.

Um beim Transport durch den Arbeitsbereich 25 eine insbesondere Drehbewegung des Schweins 14 zu der Abstützung 36, 40, 42 auszuschließen, ist des Weiteren erfindungsgemäß vorgesehen, dass an dem Schwein 14, und zwar dessen Bauchseite 24 ein Druckelement 44 abstützbar ist, sofern das Bearbeiten Bauchdecken- und Brustbeinöffnung erfolgt. Somit ist eine präzise Ausrichtung des Schweins 14 zu der Abstützung 36, 40, 42 während des Bearbeitens sichergestellt.

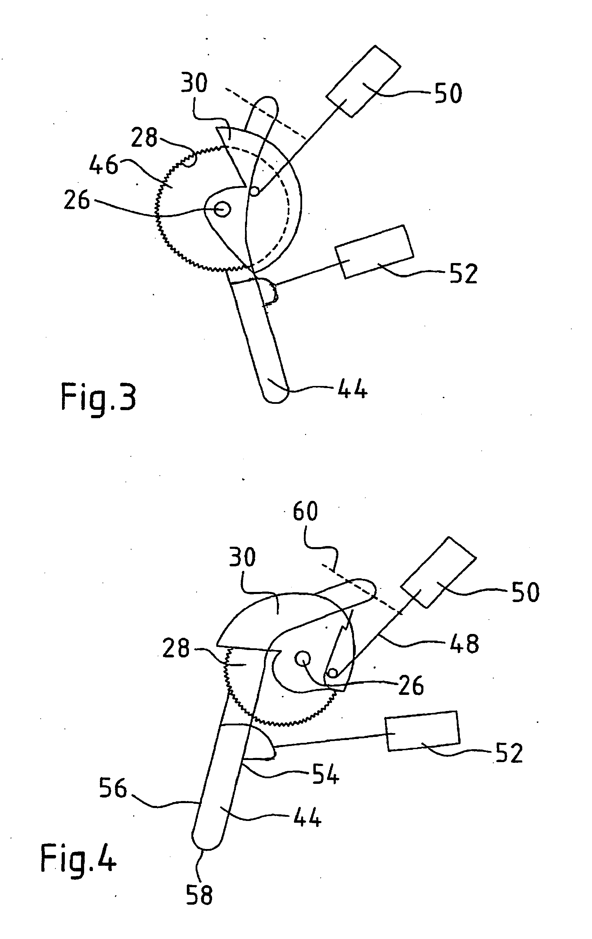

Während des zuvor erfolgenden Öffnens des Beckenknochens wird dagegen das Druckelement wie Bügel 44 von dem Schwein 14 zurückgezogen, um eine Behinderung auszuschließen. Des Weiteren wird beim Öffnen des Beckenknochens die Schutzhaube 30 zurückgezogen, wie sich aus einem Vergleich der Fig. 3 und 4 ergibt So ist in Fig. 4 das Schneidwerkzeug 28 mit der dieses bereichsweise umgebenden und um die Drehachse 26 schwenkbaren Schutzhaube 30 dargestellt in einer Position, in der der Beckenknochen geöffnet wird. Dabei ist das z. B. als Bügel ausgebildete Druckelement 44 zurückgezogen. Somit steht ein relativ großes Segment 46 des Schneidmessers 28 zur Verfügung, um den Schlossknochen zu öffnen. Zusätzlich kann die aus dem Schneidmesser 28, der Schutzhaube 30 und dem Bügel 44 bestehende Einheit zu dem Schwein 14 durch Bewegen des Arms 32 und Drohen dieses verstellt werden, so dass eine optimale Ausrichtung des Sektor 46 auf den Beckenknochen erfolgen kann. Eine mögliche Drehachse ist in Fig. 1 mit dem Bezugszeichen 45 gekennzeichnet.

Nach dem Öffnen des Schlossknochens wird die Schutzhaube 30 in Richtung des Schlachttieres 40 verschwenkt, wie dies aus einem Vergleich der Fig. 3 und 4 ersichtlich wird. Hierzu greift ein Kolben 48 eines insbesondere Luftdruckzylinders 50 an die Schutzhaube 30 an. Gleichzeitig wird das Druckelement 44 über einen Druckzylinder 52 in Richtung der Bauchseite des Schweins 14 verstellt, um an diesem anzuliegen und somit das Schwein 14 ordnungsgemäß gegen die Abstützung 36, 40, 42 zu drücken und somit zu positionieren. Das Verschwenken der Haube 30 von der ersten Stellung (Fig. 3) in die zweite Stellung (Fig. 4) erfolgt vorzugsweise über einen winkel von 90°.

Der Bügel 44 weist zwei jeweils zu einer Seite des Schneidmessers verlaufende Schenkel 54, 56 auf, die über einen Querschenkel 58 verbunden sind, der sich an dem Schwein 14 abstützt. Der Bügel 44 selbst ist um eine Achse 60 schwenkbar, der außerhalb des Schneidmessers 28 verlauft.

Erfindungsgemäß werden mit dem Schneidmesser 28 zwei komplette Bearbeitungs- oder Arbeitsschritte verrichtet, nämlich das Öffnen des Schlossknochens sowie das Öffnen von Bauchdecke und Brustbein. Beides erfolgt in derselben Bearbeitungsstation 10, wobei das Schlachttier, also im Ausführungsbeispiel das Schwein 14, während des Bearbeitens gefördert wird. Dabei erfolgt eine Abstützung des Schweins 14, um eine Positionsveränderung während des Bearbeitens auszuschließen. Hierzu drückt das Druckelement 44 das Schwein 14 gegen die Abstützung 36, 40, 42.

Während des Öffnens des Schlossknochens wird mittels des Pneumatikzylinders 50 die Abdeckhaube 30 zurückgezogen, um ein Großteil des Schneidwerkzeugs 28 freizugeben. Nach dem Öffnen des Beckenknochens wird das Schneidwerkzeug 28 im erforderlichen Umfang aus dem Schlachttierkörper herausgefahren und die Abdeckhaube 30 mittels des Pneumatikzylinders 50 um ca. 90° in Richtung des Schlachttieres 14 verschwenkt. Gleichzeitig wird über den Pneumatikzylinder 52 der Druckbügel 44 zum. Schlachttier 14 hin verschwenkt, um dieses gegen die Abstützung 36, 40, 42 zu drücken. Durch wiederholtes Anfahren an das Schlachttier 14 mit dem Schneidwerkzeug 28 werden Bauchdecke und Brustbein mittig geöffnet.

## Patentansprüche

1. Verfahren zum Durchführen von zumindest einem Bearbeitungsschritt in zumindest einer Bearbeitungsstation (10) an einem in einer Schlachtstraße entlang einer Förderbahn hängend geförderten Schlachttier (14) durch Scannen des Schlachttieres, Digitalisieren der Scanndaten und Zuführen dieser an eine Steuerung einer Handhabungseinrichtung, Roboter, (12), über die der zumindest eine Bearbeitungsschritt durchgeführt wird, wobei
in der einen Bearbeitungsstation (10) während des Förderns des Schlachttieres (14) als Bearbeitungsschritte sowohl Beckenknochen des Schlachttieres geöffnet als auch Bauchdecke und Brustbein mittig geöffnet werden unter Verwendung eines Schneidwerkzeugs mit um eine Drehachse (26) rotierendem Schneidmesser (28), **dadurch gekennzeichnet, dass** das Schneidmesser von einer drehbar um die Drehachse angeordneten Schutzhaube (30) bereichsweise abgedeckt ist, und dass das Schlachttier während des Bearbeitens mit seiner Rückenseite (38) an einer mit dem Förderer synchron mitbewegten Abstützung (36, 40, 42) abgestützt wird und gegen die Abstützung von einem mit dem Schneidwerkzeug mitbewegtem Druckelement (44) gedrückt wird, wobei beim Durchtrennen des Beckenknochens das Druckelement vom Schlachttier beabstandet wird und die Schutzhaube einen größeren Schneidsektor (46) des Schneidmessers freigibt als beim Öffnen der Bauchdecke und des Brustbeins.

2. Verfahren nach Anspruch 1,
**dadurch gekennzeichnet,**
**dass** das Schneidwerkzeug (28) mit der Abdeckung als Einheit um eine zweite Achse (45) gedreht bzw. verschwenkt wird.

3. Verfahren nach Anspruch 1 oder 2,
**dadurch gekennzeichnet,**
**dass** die Abdeckung (30) und/oder das Druckelement (44) jeweils mittels eines Druckzylinders (50, 52) wie Pneumatikzylinder verstellt wird.

4. Verfahren nach zumindest einem der vorhergehenden Ansprüche,
**dadurch gekennzeichnet,**
**dass** das Druckelement (44) um eine außerhalb des Schneidwerkzeugs (28) verlaufende dritte Achse (60) verschwenkt wird.

5. Bearbeitungsstation (10) einer Schlachtstraße, durch die ein Abschnitt eines Förderers verläuft, der ein Schlachttier (14) hängend fordert, umfassend ein zumindest einen Bearbeitungsschritt durchführendes von einer Handhabungseinrichtung (12) betätigtes Schneidwerkzeug mit einem um eine Drehachse (26) rotierenden Schneidmesser (28) wie einer Schneidsäge, das von einer um die Drehachse verschwenkbaren und das Schneidmesser bereichsweise abdeckenden Schutzhaube (30) umgeben ist, wobei in Abhängigkeit von der durchzuführenden Bearbeitung wirksamer Schneidsektor (46) des von der Schutzhaube unabgedeckten Schneidmessers unterschiedlich groß ist,
**dadurch gekennzeichnet,**
**dass** in der Bearbeitungsstation (10) eine das Schlachttier (14) abstützende und synchron mit dem Förderer mitbewegte Abstützung (36, 40, 42) vorgesehen ist, dass von der Handhabungseinrichtung (12) ein das Schlachttier gegen die Abstützung drückendes Druckelement (44) ausgeht, das in einer ersten Stellung, in der als erster Bearbeitungsschritt Beckenknochen des Schlachttieres mit dem Schneidmesser geöffnet wird, zu dem Schlachttier beabstandet ist und in einer zweiten Stellung, in der als zweiter Bearbeitungsschritt Bauchdecke und Brustbein mittig durchtrennt werden, das Schlachttier gegen die Abstützung drückt.

6. Bearbeitungsstation nach Anspruch 5,
**dadurch gekennzeichnet,**
**dass** die Abstützung zumindest ein sich entlang des Förderers erstreckendes umlaufendes Band (36, 40, 42) ist.

7. Bearbeitungsstation nach Anspruch 5 oder 6,
**dadurch gekennzeichnet,**
**dass** das Schneidwerkzeug (28) zusammen mit dem Druckelement (44) als Einheit um eine beabstandet und vorzugsweise parallel zu der Drehachse (26) verlaufende zweite Achse (45) schwenkbar ist.

8. Bearbeitungsstation nach zumindest einem der Ansprüche 5 bis 7,
**dadurch gekennzeichnet,**
**dass** das Drückelement (44) ein Bügel mit jeweils einem zu einer Seite des Schneidmessers (28) verlaufenden Schenkel (54, 56) ist, und dass die Schenkel über einen Querschenkel (58) verbunden sind, der sich an dem, Schlachttier (14) abstützt.

9. Bearbeitungsstation nach zumindest einem der Ansprüche 5 bis 8,
**dadurch gekennzeichnet,**
das das Druckelement (44) um eine außerhalb des Schneidwerkzeugs und parallel zu der Drehachse (26) verlaufend dritte Achse (60) schwenkbar ist.

10. Bearbeitungsstation nach zumindest einem der Absprüche 5 bis 9,
**dadurch gekennzeichnet,**
**dass** beim Öffnen des Beckenknochens die Schutzhaube (30) in einer zurückgezogenen wirksamen Schneidsektor (46) des Schneidmessers (28) im Vergleich zur Bauchdecke und Brustbein durchtrennenden Bearbeitung vergrößerten Stellung positioniert ist. 11. Bearbeitungsstation nach zumindest einem der Anspruche 5 bis 10,
**dadurch gekennzeichnet,**
**dass** die Schutzhaube (30) bei .die Bauchdecke und das Brustbein durchtrennender Stellung aktiv unverstellbar ist.

## Claims

1. Method for performing in at least one processing station (10) at least one processing step on an animal carcass (14) conveyed hanging head-down in a slaughter line along a conveyor by scanning of the animal carcass, digitizing of the scanned data and transmission thereof to a control unit of a handling device such as a robot (12) using which the at least one processing step is performed, where during conveying of the animal carcass (14) in the one processing station (10) both the pelvic bone of the animal carcass is opened and also the abdominal wall and sternum are opened centrally as processing steps, using a cutting tool with a cutting knife (28) rotating about a rotary axis (26),
**wherein**
the cutting knife is partly covered by a protective hood (30) arranged rotatably about the rotary axis, and wherein the animal carcass rests during its processing with its rear side (38) on a support (36, 40, 42) moved synchronously with the conveyor and is pressed against the support by a pressure element (44) moved with the cutting tool, where during cutting through of the pelvic bone the pressure element is at a distance from the animal carcass and the protective hood exposes a larger cutting sector (46) of the cutting knife than during opening of the abdominal wall and the sternum.

2. Method according to Claim 1,
**wherein**
the cutting tool (28) is rotated or swiveled with the cover as a single unit about a second axis (45).

3. Method according to Claim 1 or Claim 2,
**wherein**
the cover (30) and/or the pressure element (44) are each adjusted by a pressure cylinder (50, 52) such as a pneumatic cylinder.

4. Method according to at least one of the preceding claims,
**wherein**
the pressure element (44) is swiveled about a third axis (60) outside the cutting tool (28).

5. Processing station (10) of a slaughter line through which runs a section of a conveyer conveying an animal carcass (14) hanging head-down, comprising a cutting tool performing at least one processing step, operated by a handling device and having a cutting knife (28) such as a cutting saw rotating about a rotary axis (26) and surrounded by a protective hood (30) swivelable about the rotary axis and partially covering the cutting knife, where depending on the process to be performed the effective cutting sector (46) of the cutting knife covered by the protective hood differs in size,
**wherein**
inside the processing station (10) a support (36, 40, 42) supporting the animal carcass (14) and moved synchronously with the conveyor is provided, wherein a pressure element (44) pressing the animal carcass against the support extends from the handling device (12) and is at a distance from the animal carcass in a first position in which the pelvic bone of the animal carcass is opened with the cutting knife as the first processing step and presses the animal carcass against the support in a second position in which the abdominal wall and the sternum are cut through centrally as the second processing step.

6. Processing station according to Claim 5,
**wherein**
the support is at least an all-round strip (36, 40, 42) extending along the conveyor.

7. Processing station according to Claim 5 or Claim 6,
**wherein**
the cutting tool (28) together with the pressure element (44) is swivelable as a single unit about a second axis (45) at a distance from and preferably parallel to the rotary axis (26).

8. Processing station according to at least one of Claims 5 to 7,
**wherein**
the pressure element (44) is a bar with one side section (54, 56) passing to each side of the cutting knife (28), and wherein the side sections are connected by a transverse section (58) pressing on the animal carcass (14).

9. Processing station according to at least one of Claims 5 to 8,
**wherein**
the pressure element (44) is swivelable about a third axis (60) outside the cutting tool and parallel to the rotary axis (26).

10. Processing station according to at least one of Claims 5 to 9,
**wherein**
during opening of the pelvic bone the protective hood (30) is positioned in a reduced effective cutting sector (46) of the cutting knife (28) when compared with the enlarged position for processing that cuts through the abdominal wall and sternum.

11. Processing station according to at least one of Claims 5 to 10,
**wherein**
the protective hood (30) is actively non-adjustable in the position for cutting through the abdominal wall and sternum.

## Revendications

1. Procédé de réalisation d'au moins une étape d'usinage dans au moins un poste d'usinage (10) sur un animal de boucherie (14) transporté de manière suspendue le long d'une voie de transport dans une section d'abattoir, par balayage au scanner de l'animal de boucherie, numérisation des données scannées et transmission de celles-ci à une commande d'un dispositif de manipulation, un robot (12), par l'intermédiaire duquel l'au moins une étape d'usinage est réalisée,
sachant que, dans un poste d'usinage (10), pendant le transport de l'animal de boucherie (14), sont ouverts, sous forme d'étapes d'usinage, aussi bien l'os du bassin que la paroi abdominale et le sternum en leur milieu, à l'aide d'un outil de découpage présentant une lame (28) tournant autour d'un axe de rotation (26),
**caractérisé en ce**
**que** la lame est recouverte en partie d'un capot de protection (30) disposé autour de l'axe de rotation de manière à pouvoir tourner, et que l'animal de boucherie est, pendant l'usinage, soutenu par le dos (38) contre un support (36, 40, 42) se déplaçant en même temps que le convoyeur, et appuyé contre le support d'un élément de pression (44) se déplaçant avec l'outil de découpage, sachant que, lors du découpage de l'os du bassin, l'élément de pression est éloigné de l'animal de boucherie et que le capot de protection libère un plus grand secteur de coupe (46) de la lame que lors de l'ouverture de la paroi abdominale et du sternum.

2. Procédé selon la revendication 1,
**caractérisé en ce**
**que** l'outil de découpage (28) est, avec le capot, tourné ou pivoté en tant qu'unité autour d'un deuxième axe (45).

3. Procédé selon la revendication 1 ou 2,
**caractérisé en ce**
**que** le capot (30) et/ou l'élément de pression (44) sont déplacés respectivement au moyen d'un cylindre de pression (50, 52) tel qu'un vérin pneumatique.

4. Procédé selon au moins l'une des revendications précédentes,
**caractérisé en ce**
**que** l'élément de pression (44) est pivoté autour d'un troisième axe (60) s'étendant en dehors de l'outil de découpage (28).

5. Poste d'usinage (10) d'une section d'abattoir, à travers laquelle s'étend une partie d'un convoyeur qui transporte un animal de boucherie (14) de manière suspendue, comprenant un outil de découpage réalisant au moins une étape d'usinage et contrôlé par un dispositif de manipulation (12), lequel outil de découpage présente une lame (28), telle qu'une scie, tournant autour d'un axe de rotation (26) qui est entourée d'un capot de protection (30) pouvant être pivoté autour de l'axe de rotation et couvrant en partie la lame, sachant que, en fonction de l'usinage à réaliser, le secteur de coupe (46) de la lame non recouverte par le capot de protection est de taille différente,
**caractérisé en ce**
**qu'**est prévu, dans le poste d'usinage (10), un support (36, 40, 42) soutenant l'animal de boucherie (14) et se déplaçant de manière synchrone au convoyeur, qu'un élément de pression (44) appuyant l'animal de boucherie contre le support part du dispositif de manipulation (12), lequel élément est à distance de l'animal de boucherie, dans une première position, constituant la première étape d'usinage, lors de laquelle l'os du bassin de l'animal de boucherie est ouvert avec la lame, et appuie l'animal de boucherie contre le support dans une deuxième position, constituant la deuxième étape d'usinage, lors de laquelle la paroi abdominale et le sternum sont séparés au centre.

6. Poste d'usinage selon la revendication 5,
**caractérisé en ce**
**que** le support est au moins une bande continue (36, 40, 42) s'étendant le long du convoyeur.

7. Poste d'usinage selon la revendication 5 ou 6,
**caractérisé en ce**
**que** l'outil de découpage (28) forme avec l'élément de pression (44) une unité pouvant être pivotée autour d'un deuxième axe (45) s'étendant à distance et de préférence parallèlement à l'axe de rotation (26).

8. Poste d'usinage selon au moins l'une des revendications 5 à 7,
**caractérisé en ce**
**que** l'élément de pression (44) est un étrier avec respectivement une branche (54, 56) s'étendant vers un côté de la lame (28), et que les branches sont reliées par une branche transversale (58) qui s'appuie contre l'animal de boucherie (14).

9. Poste d'usinage selon au moins l'une des revendications 5 à 8,
**caractérisé en ce**
**que** l'élément de pression (44) peut être pivoté autour d'un troisième axe (60) s'étendant en dehors de l'outil de découpage et parallèlement à l'axe de rotation (26).

10. Poste d'usinage selon au moins l'une des revendications 5 à 9,
**caractérisé en ce**
**que**, lors de l'ouverture de l'os du bassin, le capot de protection (30) est positionné en un secteur de coupe effectif (46) de la lame (28) rétracté par rapport à la position plus élargie de l'étape consistant à séparer la paroi abdominale et le sternum.

11. Poste d'usinage selon au moins l'une des revendications 5 à 10,
**caractérisé en ce**
**que** le capot de protection (30) ne peut être activement déplacé en position de séparation de la paroi abdominale et du sternum.
